# EUROPÄISCHE PATENTANMELDUNG

(11) **EP 2 484 870 A1**
(43) Veröffentlichungstag der Anmeldung: **08.08.2012**
(21) Anmeldenummer: 11153621.5
(22) Anmeldetag: 08.02.2011
(51) Int. Cl.: F01D 5/16

(54) **Turbomaschinenschaufel mit Stimmkörper sowie Verfahren zum Entwurf einer Turbomaschine**

(71) Anmelder: MTU Aero Engines GmbH, 80995 München (DE)
(72) Erfinder: Stiehler, Frank, 04924, Bad Liebenwerda (DE); Borufka, Peter, 82319, Starnberg (DE); Hartung, Andreas, 81829, München (DE); Retze, Ulrich, 82024, Taufkirchen (DE); Pernleitner, Martin, 85221, Dachau (DE); Kraus, Jürgen, 85757, Karlsfeld (DE)

(57) **Zusammenfassung**

Die vorliegende Erfindung betrifft eine Turbomaschinenschaufel (1) mit einem Stimmkörper (2; 2'; 20), der zum Stoßkontakt mit der Schaufel vorgesehen ist, wobei eine Stimmkörperführung (3; 3'), insbesondere einen Hohlraum, durch die ein einzelner Stimmkörper (2; 2') beweglich geführt ist; und/oder einer elastischen Stützstruktur (10) zur pendelnden Lagerung des Stimmkörpers (20), und wobei die Stimmkörperführung (3; 3') bzw. Stützstruktur (10) an einem Schaufelfuß (1.10), insbesondere einem Schaufelhals (1.12) der Schaufel befestigt ist.

## Beschreibung

Die vorliegende Erfindung betrifft eine Turbomaschinenschaufel mit einem Stimmkörper, der zum Stoßkontakt mit der Schaufel vorgesehen ist, eine Turbomaschinenschaufelanordnung mit wenigstens zwei erfindungsgemäßen Turbomaschinenschaufeln, eine Turbomaschine mit wenigstens einer erfindungsgemäßen Turbomaschinenschaufel sowie ein Verfahren zum Entwurf einer solchen Turbomaschine.

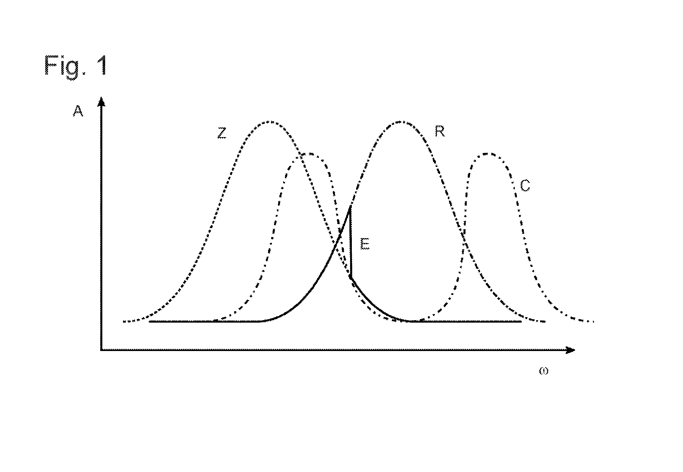

Insbesondere hohle Turbomaschinenschaufeln, etwa Lauf- oder Leitschaufeln von Flugtriebwerken, neigen aufgrund ihrer geringen Massenträgheiten unter den dynamischen Betriebsbedingungen, insbesondere strukturmechanischen und Strömungsanregungen, zu unerwünschten Vibrationen. Liegen diese in der Nähe einer Eigenfrequenz, kann dies aufgrund von Resonanzen zu erheblichen Betriebsbeeinträchtigungen und Schäden führen. Fig. 1 zeigt schematisch den Verlauf einer Schwingungsamplitude A über einer Drehzahl ω einer Gasturbine für eine Referenz- bzw. Ausgangskonfiguration R (strichpunktiert in Fig. 1). Man erkennt die Amplitudenüberhöhung in der Nähe einer Resonanzfrequenz bzw. -drehzahl.

Aus der Schwingungslehre ist es an sich bekannt, die Masse bzw. Massenverteilung einer Schaufel zu verändern, indem Zusatzmassen dauerhaft an dieser befestigt werden. Hierdurch wird die Resonanzfrequenz bei annähernd gleicher Amplitudenüberhöhung verschoben, wie dies in Fig. 1 schematisch für eine Konfiguration Z mit einer fest mit der Schaufel verbundenen Zusatzmasse skizziert ist (punktiert in Fig. 1). Beispielsweise aus der US 6,827,551 B1 ist es auch bekannt, eine Zusatzmasse im Schaufelinneren elastisch an die Schaufelspitze zu fesseln, wodurch die Amplitudenüberhöhung auf zwei neue Resonanzfrequenzen verteilt und dabei verringert wird, wie dies in Fig. 1 schematisch für eine Konfiguration C skizziert ist (doppel-strichpunktiert in Fig. 1).

Die DE 10 2009 010 185 A1 der Anmelderin schlägt vor, in einem Hohlraum im Innen- oder Außenring eines Schaufelclusters mehrere ungeführte Dämpfungskörper anzuordnen, die bei reibungsbehafteten Stößen untereinander und mit dem Hohlraum Schwingungsenergie dissipieren und so Vibrationen dämpfen sollen.

Aufgabe der vorliegenden Erfindung ist es, die Folgen von Schwingungsanregungen in Turbomaschinen zu reduzieren.

Diese Aufgabe wird durch eine Turbomaschinenschaufel mit den Merkmalen des Anspruchs 1, eine Turbomaschinenschaufelanordnung bzw. eine Turbomaschine gemäß Anspruch 12 bzw. 13 mit mehreren erfindungsgemäßen Turbomaschinenschaufeln, bzw. durch ein Verfahren zum Entwurf einer erfindungsgemäßen Turbomaschine gemäß Anspruch 14 gelöst. Vorteilhafte Weiterbildungen sind Gegenstand der Unteransprüche.

Der Erfindung liegt die Erkenntnis zugrunde, dass durch Stoßkontakte zwischen einem geführten oder pendelnd gelagerten Stimmkörper und der Schaufel, insbesondere einem Schaufelinneren, die Frequenzantwort der Schaufel verändert, sozusagen "verstimmt" werden kann. Fig. 1 zeigt diesen Effekt wiederum qualitativ für eine erfindungsgemäße Konfiguration E (ausgezogen in Fig. 1): man erkennt, dass eine Schaufel mit einem erfindungsgemäßen Stimmkörper sich in einem unteren Frequenz- bzw. Drehzahlbereich annähernd so verhält wie eine Referenzkonfiguration R ohne zusätzliche Stimmkörper. Vor Erreichen der Resonanzfrequenz dieser Konfiguration beginnt der Stimmkörper jedoch aufgrund zunehmender Vibrationen, Stöße mit der Schaufel auszuführen. Dadurch verhält sich die Schaufel überraschenderweise annähend wie ein System mit einer fest verbundenen Zusatzmasse. Man erkennt, dass dieses experimentell bestätigte Verhalten zu einer Reduzierung der auftretenden Amplituden A und damit zu einer Reduzierung der Folgen von Schwingungsanregungen in der Turbomaschine führt.

Allgemein sind daher an wenigstens einer, vorzugsweise mehreren und bevorzugt allen Turbomaschinenschaufeln einer erfindungsgemäßen Turbomaschinenschaufelanordnung, insbesondere Leit- und/oder Laufschaufeln einer oder mehrerer Stufen eines Verdichters, insbesondere eines Niederdruckverdichters, und/oder einer Turbine einer Dampf- oder Gasturbine, insbesondere eines Flugtriebwerks, je ein oder mehrere Stimmkörper angeordnet, die zum Stoßkontakt mit der Schaufel, insbesondere einem Schaufelinneren, vorgesehen sind. Unter einem Stoßkontakt im Sinne der vorliegenden Erfindung wird dabei insbesondere in fachüblicher Weise ein kurzzeitiger, sich wieder lösender und vorzugsweise mehrfach auftretender Kontakt unter elastischer und/oder plastischer Deformation des einen oder beider Stoßpartner, insbesondere mit wenigstens im Wesentlichen vollständigem Impulserhalt bzw. -austausch verstanden. Ein Stimmkörper kann durch eine entsprechend gestaltete Stimmkörperführung oder Stützstruktur zum Stoßkontakt vorgesehen sein, indem diese so ausgebildet ist, dass sie Bewegungen des Stimmkörpers ermöglicht bzw. bewirkt, bei denen dieser, direkt oder indirekt, beispielsweise über die Stimmkörperführung, ein- oder vorzugsweise mehrfache Stoßkontakte mit der Schaufel ausführt, insbesondere, wenn er durch Schwingungen bzw. Vibrationen der Schaufel zu Bewegungen angeregt wird.

Da die erfindungsgemäße Reduzierung der Folgen von Schwingungsanregungen durch die vorstehende erläuterte Verstimmung des Frequenzverhaltens erfolgt, ist eine hohe Energiedissipation durch Reibung wie in bisherigen Ansätzen nicht mehr erforderlich. Vielmehr kann in einer bevorzugten Ausführung gerade ein reibungsarmer Stoßkontakt vorgesehen sein, indem beispielsweise ein Haft- und/oder Gleitreibungsbeiwert µ₀ bzw. µ der Stoßpaarung, d.h. des Stimmkörpers und seiner Stoßkontaktfläche(n) reduziert wird, beispielsweise durch entsprechende Materialwahl, Oberflächenbehandlung wie zum Beispiel Polieren, und/oder eine reibungsmindernde Beschichtung. Vorteilhafterweise reduziert diese niedrigere Reibung die Wärmeentwicklung.

Nach einem ersten Aspekt der vorliegenden Erfindung sind eine oder mehrere Stimmkörperführungen vorgesehen, durch bzw. an denen jeweils ein einzelner Stimmkörper beweglich geführt ist. Die Führung kann eine begrenzte Hin- und Herbewegung des jeweiligen Stimmkörpers und somit das Ausführen von Stößen in einer axialen, radialen und/oder Umfangsrichtung der Turbomaschine ermöglichen. Eine radiale Komponente der Führung kann bei einer Laufschaufel vorteilhafterweise den Stimmkörper fliehkraftinduziert gegen einen radialen Anschlag vorspannen.

Vorzugsweise ist ein Stimmkörper durch eine Stimmkörperführung in im wesentlichen einer Richtung bzw. mit einem Freiheitsgrad beweglich geführt. Um dabei eine möglichst ungehinderte, reibungsarme Stoßdynamik zu realisieren, ist in einer bevorzugten Weiterbildung in den anderen, durch die Stimmkörperführung formschlüssig gesperrten Richtungen eine Toleranz vorgesehen, indem der Stimmkörper in diesen Richtungen eine geringere Außen- bzw. eine größere Innenabmessung aufweist als eine zugehörige Innen- bzw. Außenfläche der Stimmkörperführung. Die Toleranz beträgt vorzugsweise wenigstens 0,03 mm, insbesondere wenigstens 0,05 mm, und/oder höchstens 0,3 mm, insbesondere höchstens 0,2 mm. In einer bevorzugten Ausführung ist ein Gleitkontakt zwischen einer Stimmkörperführung und einem durch sie geführten Stimmkörper durch einen wenigstens im Wesentlichen ebenen und einen gekrümmten Kontaktpartner gebildet, indem beispielsweise ein Stimmkörper mit kreisförmigem Querschnitt in einem Hohlraum mit rechteckigem Querschnitt geführt ist.

In einer bevorzugten Ausführung weist eine Stimmkörperführung einen Hohlraum mit einer wenigstens teilweise geschlossenen Umfangsfläche auf, in dem ein einzelner Stimmköper in Längserstreckungsrichtung des Hohlraums beweglich und senkrecht hierzu vorzugsweise mit Toleranz bzw. Spiel aufgenommen ist. Zusätzlich oder alternativ kann eine Stimmkörperführung auch eine Achse aufweisen, auf der ein Stimmköper in Längserstreckungsrichtung der Achse beweglich und senkrecht hierzu vorzugsweise mit Toleranz bzw. Spiel geführt ist.

Im Gegensatz zu einer Anordnung von mehreren Körpern in einem Hohlraum mit hochgradig chaotischen Stoßkontakten zwischen den einzelnen Körpern gestattet die erfindungsgemäße Stimmkörperführung für einen einzelnen Stimmkörper eine genauere Abstimmung des Stoßverhaltens auf die Anregungs- und Eigendynamik der Schaufel bzw. Turbomaschine, um die eingangs erläuterte Verstimmung des Systems zu bewirken. Dabei ist eine Führung derart, dass der Stimmkörper sich im Wesentlichen nur längs einer Richtung, beispielsweise entlang einer Achse oder axial in einem Hohlraum hin- und herbewegen und senkrecht hierzu allenfalls kleine, spiel- bzw. toleranzbedingte Bewegungen ausführen kann, bevorzugt. Es kann jedoch auch eine Führung derart, dass sich ein einzelner Stimmkörper in einem ihn umfassenden Hohlraum in mehreren Richtungen, insbesondere dreidimensional, innerhalb der Hohlraumgrenzen frei bewegen kann, vorteilhaft sein, so dass auch dies als Führung im Sinne der vorliegenden Erfindung verstanden wird. Dementsprechend ist beispielsweise ein kugelförmiger Stimmkörper mit einem ersten Radius in einem kugelförmigen Hohlraum mit einem größeren zweiten Radius, in dem sich die Kugel in drei Raumrichtungen bewegen kann, in einem kanalförmigen Hohlraum mit rechteckigem Querschnitt mit einer kleineren Querschnittskantenlänge, die im Wesentlichen dem ersten Radius entspricht, und einer zweiten Querschnittskantenlänge und einer Kanallänge, die größer sind als der erste Radius, und in dem sich die Kugel im Wesentlichen in zwei Raumrichtungen bewegen kann, wie auch in einem kanalförmigen Hohlraum mit quadratischem Querschnitt mit einer Querschnittskantenlänge, die im Wesentlichen dem ersten Radius entspricht, und einer Kanallänge, die größer ist als der erste Radius, und in dem sich die Kugel im Wesentlichen in einer Raumrichtung bewegen kann, im Sinne der vorliegenden Erfindung geführt. Wenn, beispielsweise konstruktiv, kleinere Stimmkörper vorteilhaft sind, kann ein einzelner, größerer Stimmkörper auch durch zwei oder mehr kleinere Stimmkörper ersetzt werden, die jeweils einzeln durch je eine Stimmkörperführung geführt sind. Dabei können zwei oder mehr Stimmkörper und/oder Stimmkörperführungen, wenigstens im Wesentlichen, identisch ausgebildet sein.

Insbesondere, um für unterschiedliche Resonanzfrequenzen und/oder Anregungen die Folgen von Schwingungsanregungen in Turbomaschinen zu reduzieren, können zusätzlich oder alternativ zwei oder mehr Stimmkörperführungen einer Schaufel oder einer Schaufelanordnung mit zwei oder mehr Schaufeln und/oder die durch diese beweglich geführten einzelnen Stimmkörper unterschiedlich ausgebildet sein. Insbesondere können zwei Stimmkörperführungen und/oder Stimmkörper einer Schaufel unterschiedliche Geometrien, insbesondere Konturen bzw. Formen, unterschiedliche Abmessungen, beispielsweise Kugel- oder Zylinderradien, Kanten- oder Zylinderlängen, unterschiedliches Material, unterschiedliche Oberflächen, insbesondere Oberflächenbearbeitungen und/oder -beschichtungen, und/oder Massen bzw. Massenverteilungen, d.h. Trägheitstensoren bzw. -momente, aufweisen. Dabei ist gemäß dem ersten Aspekt der vorliegenden Erfindung vorgesehen, dass wenigstens eine Stimmkörperführung einen einzelnen Stimmkörper, d.h. genau einen Stimmkörper, beweglich führt, so dass dieser Stöße mit einer Bewegungsbegrenzung der Stimmkörperführung bzw. der Schaufel ausführen kann.

In einer bevorzugten Ausführung ist eine Stimmkörperführung mehrteilig ausgebildet, um den Stimmkörper aufzunehmen. Insbesondere kann ein Stimmkörperführungsgehäuse, welches einen Hohlraum zur Aufnahme eines einzelnen Stimmkörpers bildet, zwei oder mehr Teile aufweisen. Hierzu kann das Gehäuse insbesondere axial und/oder radial geteilt sein, d.h. sich aus zwei oder mehr Teilen zusammensetzen, die zusammen eine wenigstens teilweise geschlossene Umfangsfläche zur Führung des Stimmkörpers definieren. Als teilweise geschlossen wird insbesondere eine Umfangsfläche bezeichnet, die durch einzelne Axial- und/oder Umfangsstreben definiert wird wie beispielsweise bei einem gitterförmigen Rohr.

Bei einem solcherart mehrteiligen Stimmkörperführungsgehäuse kann vorteilhafterweise zunächst wenigstens ein Teil an der Schaufel angeordnet, insbesondere integral mit dieser ausgebildet oder, vorzugsweise unlösbar, an dieser befestigt werden. Anschließend kann ein Stimmkörper an diesem Teil bzw. diesen Teilen angeordnet und durch das bzw. die restlichen damit verbundenen Teile des Stimmkörperführungsgehäuses formschlüssig geführt werden, die gemeinsam den Hohlraum definieren. Allgemein kann ein Stimmkörpergehäuse, wenigstens teilweise, integral mit einer Schaufel ausgebildet, beispielsweise urgeformt, oder als separates Bauteil mit dieser lösbar, insbesondere formschlüssig, oder unlösbar, insbesondere stoffschlüssig, durch Löten oder dergleichen, verbunden sein. Ist die Stimmkörperführung als separates Bauteil mit der Schaufel formschlüssig verbunden, kann es seinerseits in bzw. an der Schaufel befestigt oder beweglich geführt sein, so dass sowohl der Stimmkörper mit der Stimmkörperführung als auch die Stimmkörperführung mit der Schaufel Stöße ausführen können. Dementsprechend wird auch ein indirekter, mehrstufiger bzw. -phasiger Stoßkontakt zwischen Stimmkörper und Schaufel über die Stimmkörperführung als Stoßkontakt im Sinne der vorliegenden Erfindung bezeichnet.

Zusätzlich oder alternativ können auch eine oder mehrere Stimmkörperführungsanschläge vor oder nach Anordnen wenigstens eines Stimmkörpers an dem Stimmkörperführungsgehäuse befestigt werden. So können beispielsweise in einer bevorzugten Ausführung in einem Stimmkörperführungsgehäuse zwei oder mehr Stimmkörper aufgenommen sein, die durch dazwischen angeordnete Stimmkörperführungsanschläge voneinander getrennt sind, so dass in einem durch zwei Stimmkörperführungsanschläge begrenzten Hohlraum jeweils ein einzelner Stimmkörper geführt ist. Ein Stimmkörperanschlag kann allgemein durch einen Teil eines, vorzugsweise separaten, Stimmkörperführungsgehäuses oder durch einen Teil der Turbomaschinenschaufel, gebildet sein.

Eine erfindungsgemäße Stimmkörperführung ist vorzugsweise innerhalb einer Schaufel, insbesondere in einem Schaufelfuß und besonders bevorzugt in einem Schaufelhals, angeordnet. Insbesondere, um die Anordnung des Stimmkörpers an, insbesondere in, seiner Stimmkörperführung zu erleichtern, sind in einer bevorzugten Ausführung eine oder mehrere Stimmkörperführungen, vorzugsweise symmetrisch, zwischen zwei Schaufeln angeordnet. Vorteilhafterweise können dann zunächst die eine Schaufel, der bzw. die Stimmkörper und gegebenenfalls Stimmkörperführungen bzw. Stimmkörperführungsteile, und anschließend die andere Schaufel an einem Schaufelträger, beispielsweise einem Rotor oder Gehäuse der Turbomaschine, angeordnet und so der bzw. die Stimmkörper(führungen) zwischen benachbarten Schaufeln fixiert werden. Gleichermaßen ist es auch möglich, eine Stimmkörperführung fest an einer Schaufel zu befestigen und in einer benachbarten Schaufel lösbar aufzunehmen, wenn diese neben der Schaufel mit befestigter Stimmkörperführung angeordnet wird.

Nach einem zweiten Aspekt der vorliegenden Erfindung ist wenigstens ein Stimmkörper durch eine elastische Stützstruktur pendelnd gelagert, so dass er bei einer Schwingung, deren Folgen reduziert werden sollen, Stoßkontakte mit dem Schaufelinneren ausführt und so das Frequenzverhalten wie einleitend erläutert erfindungsgemäß verstimmt. Vorzugsweise ist ein Stimmkörper radial über einer ihn lagernden elastischen Stützstruktur angeordnet, so dass sich im eingebauten Zustand ein sogenanntes stehendes Pendel ergibt. Dies ist aufgrund seiner mechanischen Eigenschaften, insbesondere seiner Metastabilität, vorteilhaft, um die gewünschten Stoßkontakte auszuführen.

Die Stützstruktur kann, wenigstens teilweise, integral mit der Schaufel hergestellt werden. Gleichermaßen kann die Stützstruktur, die allgemein vorzugsweise symmetrisch ausgebildet ist, wenigstens teilweise als separates Bauteil ausgebildet und lösbar, beispielsweise formschlüssig, insbesondere durch Stecken, oder unlösbar, vorzugsweise stoffschlüssig, insbesondere durch Kleben, Löten, Schweißen, und/oder durch Schrauben, Nieten oder andere Befestigungsmittel, an der Schaufel befestigt sein. Der Stimmkörper kann seinerseits integral mit der Stützstruktur ausgebildet oder an dieser lösbar oder unlösbar befestigt sein. Wie ein durch eine Stimmführung geführter Stimmkörper gemäß dem ersten Aspekt kann ein lösbar an der Stützstruktur befestigter Stimmkörper und/oder eine lösbar an der Schaufel befestigte Stützstruktur die empirische Abstimmung auf das Schwingungsverhalten im Betrieb erleichtern, indem beispielsweise Stimmkörper mit verschiedenen Massen, Oberflächen und dergleichen, und/oder Stützstrukturen mit verschiedenen Steifigkeiten und dergleichen wechselweise getestet werden.

In einer bevorzugten Ausführung beträgt ein Spalt zwischen einem ruhenden Stimmkörper und einer Kontaktfläche der unverformten Schaufel höchstens die Hälfte der Auslenkung der Kontaktfläche in einer Eigenform der Schaufel. Dies stellt den gewünschten mehrfachen Stoßkontakt und damit die erfindungsgemäße Verstimmung in der Nähe dieser Eigenform bzw. -frequenz sicher.

Die Stützstruktur kann eine Vorzugspendelrichtung aufweisen. Hierzu kann sie beispielsweise einen Querschnitt mit unterschiedlichen Flächenträgheitsmomenten, etwa einen Querschnitt eines schmalen, hohen Rechtecks, aufweisen. Dann weist die Stützstruktur um die Achse des höheren Flächenträgheitsmomentes eine größere Biegesteifigkeit auf, so dass eine Vorzugspendelrichtung in Richtung der geringeren Steifigkeit eingeprägt ist.

Sowohl nach dem ersten als auch dem zweiten Aspekt ist die Stimmkörperführung bzw. Stützstruktur an einem Schaufelfuß der Schaufel befestigt, wobei, wie vorstehend erläutert, neben einer lösbaren und einer unlösbaren Befestigung auch eine integrale Ausbildung als Befestigung im Sinne der vorliegenden Erfindung verstanden wird.

Als Schaufelfuß wird vorliegend in fachüblicher Weise insbesondere ein radialer Abschnitt einer Schaufel verstanden, der sich zwischen einer Befestigung an bzw. einem Übergang in einen Rotor oder ein Gehäuse der Turbomaschine einerseits und einem Schaufelblatt andererseits erstreckt, welches zur Umlenkung eines Arbeitsfluides vorgesehen und in einem Strömungskanal der Turbomaschine angeordnet ist. Ein Schaufelfuß kann damit insbesondere den manchmal ebenfalls als Schaufelfuß bezeichneten Zapfen der Schaufel bezeichnen, der - beispielsweise in Tannenform als sogenannter Tannenfuß - in eine entsprechende Nut eines Rotors bzw. Gehäuses eingesetzt und dort gehalten ist. Zusätzlich kann ein Schaufelfuß im Sinne der vorliegenden Erfindung einen manchmal als Schaufelhals bezeichneten Abschnitt umfassen, der einen fußnahen Innenring der Schaufel bildet und im Bereich der Schaufel den Strömungskanal in axialer und Umfangsrichtung definieren kann. Bevorzugt ist die Stimmkörperführung bzw. Stützstruktur an einem Schaufelhals des Schaufelfußes befestigt, der sich zwischen einem Schaufelzapfen zur Befestigung an einem Rotor und einem Schaufelblatt mit Tragflächenprofil erstreckt und vorzugsweise wenigstens ein Deckblatt zur Bildung eines Innenringes aufweisen kann.

Es hat sich herausgestellt, dass das erfindungsgemäße Konzept der Verstimmung auch durch eine am, insbesondere wenigstens teilweise im, Schaufelfuß befestigte Stimmkörperführung bzw. Stützstruktur, zu einer deutlichen Reduzierung der Folgen von Schwingungsanregungen führt. Eine solche fußnahe Anordnung ist konstruktiv und montagetechnisch vorteilhaft. Zudem ist bei Laufschaufeln eine gyroskopische Beanspruchung durch Kreisel-, insbesondere Zentrifugal- und Corioliskräfte, geringer.

Die elastische, am Schaufelfuß befestigte Stützstruktur, die als stehendes Pendel den Stimmkörper lagert, kann so ausgebildet und angeordnet sein, dass ein Stoßkontakt des Stimmköpers mit einem Inneren des Schaufelfußes erfolgt. In einer bevorzugten Abwandlung kann, insbesondere durch entsprechende Befestigung und/oder Länge der Stützstruktur, auch ein Stoßkontakt des Stimmköpers mit einer unteren, d.h. fußnahen Hälfte eines Schaufelblattes der Schaufel vorgesehen sein, d.h. der pendelnd gelagerte Stimmkörper kann radial innerhalb des hohlen Schaufelblattes angeordnet sein.

Wie bereits erläutert, ist die vorliegende Erfindung insbesondere zur Reduzierung der Folgen von Schwingungsanregungen von Laufschaufeln einer Turbomaschine, insbesondere einer Gasturbine und vorzugsweise eines Flugtriebwerkes, geeignet. Sie kann jedoch auch für Leitschaufeln solcher oder anderer Turbomaschinen vorteilhaft verwendet werden.

Ein Stimmkörper ist in einer bevorzugten Ausführung, wenigstens im Wesentlichen, kugel- oder zylinderförmig ausgebildet. Dies bedingt eine vorteilhafte Stoß- und gegebenenfalls Gleitkinematik.

Vorzugsweise sind ein Stimmkörper, eine Stimmkörperführung, eine Stützstruktur und/oder eine Kontaktfläche zwischen Stimmkörper und Stimmkörperführung bzw. Schaufel, insbesondere eine Geometrie, Abmessung, Oberfläche, Masse, Steifigkeit, ein Reibbeiwert und/oder ein Material, auf eine Eigenfrequenz und/oder eine Anregung der Turbomaschine, insbesondere wenigstens einer Schaufel der Turbomaschine, abgestimmt. Dies kann gleichermaßen rechnerisch, insbesondere durch numerische Simulation der Schaufel mit dem Stimmkörper unter Variation eines oder mehrerer der oben genannten Parameter, oder empirisch, insbesondere durch Test mit verschiedenen Stimmkörpern, Stimmkörperführungen, Stützstrukturen bzw. Kontaktflächen, die sich in einem oder mehrerer der oben genannten Parameter unterscheiden, erfolgen.

Weitere Merkmale und Vorteile ergeben sich aus den Unteransprüchen und den Ausführungsbeispielen. Hierzu zeigt, teilweise schematisiert:
- Fig. 1:: das Frequenzverhalten, insbesondere die Amplitudenantwort auf eine Anregungsfrequenz, für verschiedene Schaufelkonfigurationen;
- Fig. 2:: eine perspektivische Darstellung einer Laufschaufel gemäß einer Ausführung der vorliegenden Erfindung mit Schaufelfuß und Stimmkörperführung (jeweils teilweise geschnitten);
- Fig. 3:: eine radiale Draufsicht in Richtung auf den Schaufelfuß der Schaufel der Fig. 2;
- Fig. 4:: den Schaufelfuß der Fig. 2 in vergrößerter, Fig. 2 entsprechender Darstellung;
- Fig. 5:: den Schaufelfuß einer abgewandelten Ausführung in Fig. 4 entsprechender Darstellung;
- Fig. 6:: eine teilweise geschnittene perspektivische Darstellung einer Laufschaufel gemäß einer weiteren Ausführung der vorliegenden Erfindung; und
- Fig. 7:: einen Teil des Schaufelfußes und der unteren Schaufelblatthälfte der Fig. 6.

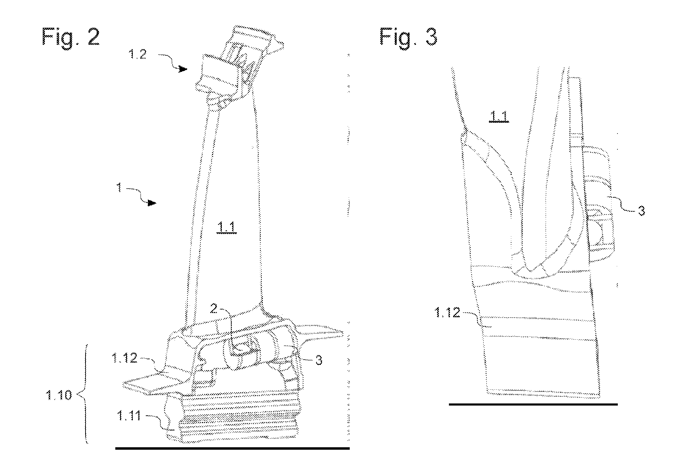

Fig. 2 zeigt in perspektivischer, teilweise geschnittener Darstellung eine Laufschaufel 1 eines Gasturbinen-Niederdruckverdichters gemäß einer Ausführung der vorliegenden Erfindung. Man erkennt in Fig. 2 unten einen Schaufelfuß 1.10 mit einem tannenförmigen Zapfen 1.11 zur Aufnahme in einer Rotornut (nicht dargestellt) und einem Schaufelhals 1.12 mit Deckblättern, welche sich axial vor und hinter und in Umfangsrichtung neben einem Schaufelblatt 1.1 erstrecken und so zusammen mit den Deckblättern der benachbarten Laufschaufeln (nicht dargestellt) einen Innenring bilden. An dem dem Fuß 1.10 radial gegenüberliegenden Ende setzt sich das Schaufelblatt 1.1, welches zur Strömungsumlenkung vorgesehen ist und ein Tragflügelprofil aufweist, in einen Schaufelkopf 1.2 fort, der zum Einen Deckblätter zur Bildung eines Außenringes und zum Anderen zwei Dichtspitzen aufweist.

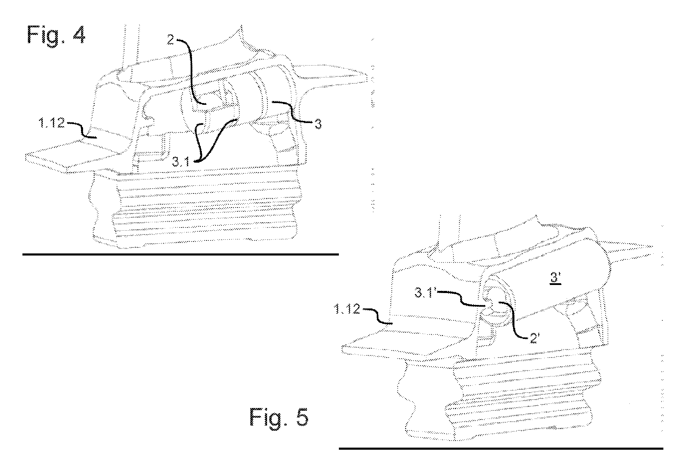

Im Schaufelfuß 1.10, genauer gesagt im Schaufelhals 1.12 zwischen Zapfen 1.11 und Schaufelblatt 1.1, ist ein zylinderförmiges Stimmkörperführungsgehäuse 3 befestigt, auf das nachfolgend mit Bezug auf die vergrößerte Darstellung der Fig. 4 näher eingegangen wird. In dieser und insbesondere in der Draufsicht der Fig. 3 ist erkennbar, dass das zylinderförmige Stimmkörperführungsgehäuse 3 mit seiner einen Hälfte in einer hierzu durch Fräsen im Inneren des Schaufelhalses 1.12 hergestellten Kalotte durch Löten befestigt ist. Eine benachbarte Schaufel (nicht dargestellt) weist auf der im Montagezustand der Schaufel 1 zugewandten Innenseite ihres Schaufelhalses eine identische, halbkreiszylinderförmige Kalotte auf, so dass das Stimmkörperführungsgehäuse 3 symmetrisch zwischen den zwei Schaufeln angeordnet ist, wenn diese am Rotor (nicht dargestellt) montiert sind. In der benachbarten Schaufel ist das Stimmkörperführungsgehäuse 3 dann formschlüssig, jedoch lösbar befestigt, um die Schaufeln wieder voneinander lösen und so die Niederdruckverdichterstufe demontieren zu können. Auf der dieser benachbarten Schaufel abgewandten Innenseite ihres Schaufelhalses 1.12 weist die in Fig. 2 dargestellte Laufschaufel 1 ihrerseits eine in Fig. 2 nicht erkennbare, identische Kalotte auf, die ihrerseits zur formschlüssigen, lösbaren Aufnahme eines Stimmkörperführungsgehäuses einer weiteren benachbarten Laufschaufel vorgesehen ist, so dass an jeder Laufschaufel je ein Stimmkörperführungsgehäuse 3 unlösbar durch Löten befestigt ist und aus dieser hervorragt, um in einer entsprechende Kalotte der in Umfangsrichtung folgenden Laufschaufel lösbar aufgenommen zu werden. In einer nicht dargestellten Abwandlung sind die Stimmkörperführungsgehäuse in keiner der beiden es einschlie-βenden Laufschaufelhälse verlötet, sondern lediglich formschlüssig in den Kalotten geführt.

In Fig. 4 ist der Schaufelhals 1.12 und das darin teilweise aufgenommene Stimmkörperführungsgehäuse 3 vergrößert und teilweise geschnitten dargestellt. Das rohrförmige Stimmkörperführungsgehäuse 3 ist durch vier Stimmkörperführungsanschläge 3.1 in drei separate Hohlräume unterteilt, in denen jeweils ein einzelner, kugelförmiger Stimmkörper 2 aufgenommen ist. Die Kugeln 2, deren Radius jeweils in etwa dem Radius des zylinderförmigen Hohlraums entspricht und geringer ist als die Längserstreckung des Hohlraumes, um eine Hin- und Herbewegung der Kugel in diesem zu ermöglichen, können beispielsweise in dem jeweiligen Hohlraum angeordnet werden, indem nacheinander jeweils ein Stimmkörperführungsanschlag 3.1 und ein Rohrstück des Stimmkörperführungsgehäuses 3 mit darin eingesetzter Kugel 2 miteinander verbunden, beispielsweise verlötet, werden. Die einzeln in Hohlräumen geführten Stimmkörper 2 können ebenso wie die sie führenden Hohlräume identisch oder unterschiedlich ausgebildet sein. Beispielsweise können die Kugeln aus unterschiedlichem Material sein und so trotz gleicher Abmessungen unterschiedliche Massen aufweisen. Gleichermaßen können die Hohlräume unterschiedlich lang sein und so unterschiedliche Bewegungsamplituden der Kugeln vorgeben.

Im Betrieb werden die Kugeln 2 aufgrund der radialen Komponente der durch die Stimmkörperführung 3 vorgegebenen Bewegungsrichtung durch die Fliehkräfte radial nach außen zum Schaufelkopf 1.2 hin gezwungen und liegen dort an dem jeweiligen Stimmkörperführungsanschlag 3.1 an. In der Nähe einer Eigenfrequenz beginnt wenigstens eine hierauf abgestimmte Kugel aufgrund der zunehmenden Schaufelvibrationen, sich kurzzeitig von dem Stimmkörperführungsanschlag 3.1 zu lösen, um aufgrund der Fliehkräfte anschließend wieder in Stoßkontakt mit ihm zu treten. Dieser Vorgang wiederholt sich mehrfach, so dass auftretenden Schwingungen der Schaufel 1 stochastisch Stöße einer oder mehrerer Stimmkörper 2 entgegenwirken und so das Frequenzverhalten verstimmen. Auf diese Weise ergibt sich die in Fig. 1 ausgezogen dargestellte, mit "E" gekennzeichnete Charakteristik mit deutlich reduzierten Schwingungsamplituden.

Fig. 5 zeigt in Fig. 4 entsprechender Darstellung eine Abwandlung. Übereinstimmende Merkmale sind mit identischen Bezugszeichen bezeichnet, so dass nachfolgend nur auf die Unterschiede zur vorstehend erläuterten Ausführung eingegangen wird, die bis auf diese Unterschiede mit der Abwandlung übereinstimmt.

In der Abwandlung ist nur ein zylinderförmiger Stimmkörper 2' in einem entsprechend, durchgehenden Innenkanal des Stimmkörpergehäuses 3' angeordnet und wird in seiner Bewegung in Gehäuselängsrichtung durch Stimmkörperführungsanschläge 3.1' begrenzt, die integral mit dem Schaufelhals 1.12 ausgebildet sind. Der Innenkanal weist einen im Wesentlichen quadratischen Querschnitt auf, so dass sich mit der gekrümmten Zylinderumfangsfläche des Stimmkörpers 2' ein günstiger Gleitkontakt einstellt. Es ergibt sich wiederum ein qualitativ in Fig. 1 dargestelltes Frequenzverhalten, wobei hier durch den einen, schweren Stimmkörper 3.2' nur eine, niedrigere Eigenfrequenz der Schaufel 1 verstimmt wird.

Die im Schaufelhals 1.12 geformte Kalotte kann wahlweise das Stimmkörpergehäuse 3 oder 3' aufnehmen, so dass in einfacher Weise, insbesondere zu Testzwecken oder für unterschiedliche Betriebsbedingungen, unterschiedliche Konfigurationen ausgebildet werden können.

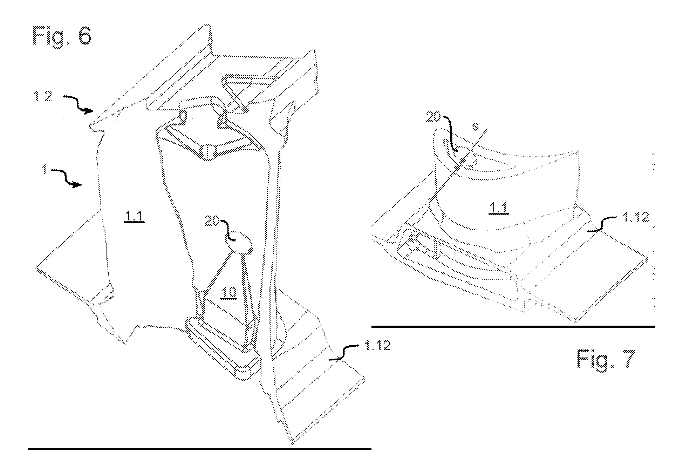

Fig. 6 zeigt in einer teilweise geschnittenen perspektivischen Darstellung einer Laufschaufel 1 gemäß einer weiteren Ausführung der vorliegenden Erfindung. Wiederum sind mit den vorstehend erläuterten Ausführungen übereinstimmende Merkmale mit identischen Bezugszeichen bezeichnet, so dass nachfolgend nur auf die Unterschiede zu den vorstehend mit Bezug auf Fig. 2 bis 5 erläuterten Ausführungen eingegangen wird, die bis auf diese Unterschiede mit der Ausführung gemäß Fig. 6, 7 übereinstimmen. Zur kompakteren Darstellung ist der Zapfen des Schaufelfußes nicht dargestellt, sondern nur dessen Schaufelhals 1.12.

An diesem ist, beispielsweise lösbar durch formschlüssiges Einstecken, oder unlösbar durch zusätzliches Verlöten, Verschweißen oder dergleichen, der Fuß einer Stützstruktur 10 befestigt, die in Form eines stehenden, d.h. sich radial zum Schaufelkopf 1.2 hin erstreckenden, Pendels eines ellipsoiden Stimmkörper 20 lagert. Der Stimmkörper 20 ist fest mit der Stützstruktur 10 verbunden, die beispielsweise einen T-förmigen Querschnitt mit einem sich axial erstreckenden Stützstrukturfuß und einer daraus radial abragenden Stützsäule aufweist. Die dünne, elastische Stützsäule ermöglicht eine Pendelbewegung des Stimmkörpers 20, bei der dieser in Stoßkontakt mit der Innenwandung der unteren Hälfte der hohlen Laufschaufel 1 kommt.

Hierzu beträgt ein Spalt s zwischen dem ruhenden Stimmkörper 20 und einer Kontaktfläche der unverformten Schaufel, d.h. einer Innenwandung des hohlen Schaufelblattes 1.1, höchstens die Hälfte der Auslenkung der Kontaktfläche in einer Eigenform der Schaufel 1, deren Folgen erfindungsgemäß reduziert werden sollen. Die Auslenkung in der Eigenform kann beispielsweise gemessen oder durch eine FEM-Rechnung ermittelt werden, so dass die Abmessung und Anordnung des Stimmkörpers 20 hierauf abgestimmt werden kann. Auch die Steifigkeit der Stützstruktur 10 kann gemessen oder durch eine FEM-Rechnung ermittelt und so abgestimmt werden, dass in der in den Blick genommenen Eigenfrequenz der durch die Schaufelvibration angeregte Stimmkörper 20 Pendelbewegungen ausführt, die zu mehrfachen Stoßkontakten mit der Schaufelblattinnenwand führen.

Die Stützstruktur 10 kann eine Vorzugspendelrichtung aufweisen, beispielsweise aufgrund des in axialer Richtung der Turbomaschine breiteren Querschnitts der Stützsäule, die eine höhere Steifigkeit in axialer Richtung der Turbomaschine bewirkt, eine Vorzugspendelrichtung in Umfangsrichtung der Turbomaschine.

### Bezugszeichenliste

- 1: Turbomaschinenschaufel
- 1.1: Schaufelblatt
- 1.2: Schaufelkopf
- 1.10: Schaufelfuß
- 1.11: Zapfen des Schaufelfußes
- 1.12: Schaufelhals des Schaufelfußes
- 2; 2'; 20: Stimmkörper
- 3; 3': Stimmkörperführung(sgehäuse)
- 3.1, 3.1': Stimmkörperführungsanschlag
- 10: Stützstruktur
- A: Amplitude
- C: Konfiguration mit elastisch gefesselter Zusatzmasse
- E: Erfindungsgemäße Konfiguration
- R: Referenzkonfiguration
- s: Spalt zwischen ruhendem Stimmkörper und unverformtem Schaufelblatt
- Z: Konfiguration mit dauerhaft befestigter Zusatzmasse
- ω: Drehzahl bzw. Frequenz

## Patentansprüche

1. Turbomaschinenschaufel (1) mit einem Stimmkörper (2; 2'; 20), der zum Stoßkontakt mit der Schaufel vorgesehen ist;
**gekennzeichnet durch**
eine Stimmkörperführung (3; 3'), insbesondere einen Hohlraum, **durch** die ein einzelner Stimmkörper (2; 2') beweglich geführt ist; und/oder
einer elastischen Stützstruktur (10) zur pendelnden Lagerung des Stimmkörpers (20), wobei die Stimmkörperführung (3; 3') bzw. Stützstruktur (10) an einem Schaufelfuß (1.10), insbesondere einem Schaufelhals (1.12) der Schaufel befestigt ist.

2. Turbomaschinenschaufel nach Anspruch 1, **dadurch gekennzeichnet, dass** die Schaufel eine Laufschaufel einer Turbomaschine, insbesondere einer Gasturbine, ist.

3. Turbomaschinenschaufel nach einem der vorhergehenden Ansprüche, **gekennzeichnet durch** wenigstens eine weitere Stimmkörperführung (3), insbesondere einen weiteren Hohlraum, **durch** die ein einzelner Stimmkörper beweglich geführt ist.

4. Turbomaschinenschaufel nach Anspruch 3, **dadurch gekennzeichnet, dass** zwei Stimmkörperführungen (3) und/oder ein durch eine Stimmkörperführung und ein durch eine andere Stimmkörperführung beweglich geführter einzelner Stimmkörper (2) sich unterscheiden, insbesondere unterschiedliche Geometrien, Abmessungen, Materialien, Oberflächen und/oder Massen aufweisen.

5. Turbomaschinenschaufel nach einem der vorhergehenden Ansprüche, **dadurch gekennzeichnet, dass** eine Stimmkörperführung (3; 3') an der Schaufel (1) geführt oder, insbesondere unlösbar, befestigt ist.

6. Turbomaschinenschaufel nach einem der vorhergehenden Ansprüche, **dadurch gekennzeichnet, dass** eine Stimmkörperführung, insbesondere ein einen Hohlraum bildendes Stimmkörperführungsgehäuse (3, 3'), mehrteilig ausgebildet ist.

7. Turbomaschinenschaufel nach einem der vorhergehenden Ansprüche, **dadurch gekennzeichnet, dass** ein Gleitkontakt zwischen einer Stimmkörperführung (3; 3') und einem durch **sie** geführten Stimmkörper (2; 2') durch einen wenigstens im Wesentlichen ebenen und einen gekrümmten Kontaktpartner gebildet ist.

8. Turbomaschinenschaufel nach einem der vorhergehenden Ansprüche, **dadurch gekennzeichnet, dass** ein Stimmkörper (2; 2'), wenigstens im Wesentlichen, kugel- oder zylinderförmig ausgebildet ist.

9. Turbomaschinenschaufel nach einem der vorhergehenden Ansprüche, **dadurch gekennzeichnet, dass** ein Stimmkörper (20) radial über einer ihn lagernden elastischen Stützstruktur (10) angeordnet ist.

10. Turbomaschinenschaufel nach einem der vorhergehenden Ansprüche, **dadurch gekennzeichnet, dass** ein Stoßkontakt eines Stimmköpers mit einem Inneren des Schaufelfußes oder einer unteren Hälfte eines Schaufelblattes (1.1) der Schaufel vorgesehen ist.

11. Turbomaschinenschaufel nach einem der vorhergehenden Ansprüche, **dadurch gekennzeichnet, dass** ein Spalt (s) zwischen einem ruhenden Stimmkörper (20) und einer Kontaktfläche der unverformten Schaufel höchstens die Hälfte der Auslenkung der Kontaktfläche in einer Eigenform der Schaufel beträgt.

12. Turbomaschinenschaufelanordnung mit wenigstens zwei Turbomaschinenschaufeln nach einem der vorhergehenden Ansprüche, **dadurch gekennzeichnet, dass** eine Stimmkörperführung (3; 3'), insbesondere symmetrisch, zwischen zwei Schaufeln angeordnet ist.

13. Turbomaschine, insbesondere Gasturbine, mit einer wenigstens einer Turbomaschinenschaufel (1) nach einem der vorhergehenden Ansprüche 1 bis 11 oder einer Turbomaschinenschaufelanordnung nach Anspruch 12, **dadurch gekennzeichnet, dass** ein Stimmkörper (2; 2'; 20), eine Stimmkörperführung (3; 3'), eine Stützstruktur (10) und/oder eine Kontaktfläche zwischen Stimmkörper und Stimmkörperführung bzw. Schaufel, insbesondere eine Geometrie, Abmessung, Oberfläche, Masse, Steifigkeit, ein Reibbeiwert und/oder ein Material, auf eine Eigenfrequenz und/oder eine Anregung der Turbomaschine, insbesondere wenigstens einer Schaufel der Turbomaschine, abgestimmt sind.

14. Verfahren zum Entwurf einer Turbomaschine, insbesondere Gasturbine, mit wenigstens einer Turbomaschinenschaufel nach einem der vorhergehenden Ansprüche 1 bis 11 oder einer Turbomaschinenschaufelanordnung nach Anspruch 12, **dadurch gekennzeichnet, dass** ein Stimmkörper (2; 2'; 20), eine Stimmkörperführung (3; 3'), eine Stützstruktur (10) und/oder eine Kontaktfläche zwischen Stimmkörper und Stimmkörperführung bzw. Schaufel, insbesondere eine Geometrie, Abmessung, Oberfläche, Masse, Steifigkeit, ein Reibbeiwert und/oder ein Material, auf eine Eigenfrequenz und/oder eine Anregung der Turbomaschine, insbesondere wenigstens einer Schaufel der Turbomaschine, abgestimmt wird.

15. Verfahren nach Anspruch 14, , **dadurch gekennzeichnet, dass** wahlweise eine von mehreren unterschiedlichen Stimmkörpern (2; 2', 20), Stimmkörperführungen (3; 3') und/oder Stützstrukturen (10) verwendet wird.
